# EUROPEAN PATENT APPLICATION

(11) **EP 4 556 540 A1**
(43) Date of publication of application: **21.05.2025**
(21) Application number: 23306969.9
(22) Date of filing: 14.11.2023
(51) Int. Cl.: C09J 123/14, C09J 187/00, C08L 87/00, C08L 23/14

(54) **A HOT MELT ADHESIVE COMPOSITION, ARTICLE COMPRISING THE SAME AND USE THEREOF**

(71) Applicant: Bostik SA, 92800 Puteaux (FR)
(72) Inventor: LI, Yong, Shanghai 201108 (CN); WEI, Jiangong, Shanghai 201108 (CN)
(74) Representative: Arkema Patent

(57) **Abstract**

Provided is a hot melt adhesive composition comprising (A) at least one polyolefin; (B) a polyolefin-polyamide copolymer; (C) optional a tackifying resin; (D) optional a wax; (E) optional additives, wherein based on the total weight of the composition, the weight percent of the polyolefin-polyamide copolymer in the hot melt adhesive composition is 12 to 38 wt%. Provided is also an article comprising the hot melt adhesive composition and the use thereof. Provided is also use of the polyolefin-polyamide copolymer for reducing stringing of a hot melt adhesive composition.

## Description

### TECHNICAL FIELD

The present invention relates to the field of hot-melt adhesive composition. More specifically, the invention relates to a hot-melt adhesive composition with excellent anti-stringing behavior.

### TECHNICAL BACKGROUND

Hot melt adhesives, especially solvent-free hot melt adhesives, are widely used in the fields of automotive, assembly, electronic and wood working because they are environmentally friendly, easy to apply and highly efficient.

With the increase of the automation and the speed of production lines, the hot melt adhesives used need to have high-speed application properties. However, hot melt adhesives are susceptible to cause stringing during the application process. By "stringing" is meant a phenomenon which occurs when some of the hot-melt adhesive material is left behind on the nozzle and gets pulled down the line. This stringing becomes more remarkable when the distance between the nozzle and the article to which the adhesive is applied becomes larger, when the line speed is high or when the melt viscosity of the hot-melt adhesive is high. This phenomenon easily causes a number of issues such as contaminating the production line or the finishing products (packages), therefore leading to defective products, or even affecting the manufacturing process.

Thus, it is industrially very important to eliminate the stringing phenomenon at the time of operation. JPH1161067A discloses blending a specified fumed silica into a hot-melt adhesive composition containing an ethylene/unsaturated ester copolymer, a tackifying resin, and a wax, in order to reduce stringing.

There is still need for a hot melt adhesive composition that has excellent bonding strength and can reduce or avoid stringing simultaneously, without compromising the processability.

### SUMMARY OF THE INVENTION

It has now been found that the composition according to the present application meets these needs. It was found notably that the particular combination according to the present application, combining particular polyolefin(s), a particular polyolefin-polyamide copolymer, preferably at particular contents, led to a composition having improved bonding properties, as well as desired anti-stringing behavior.

Therefore, in a first aspect, the invention relates to a hot melt adhesive composition comprising:
(A) at least one polyolefin;
(B) a polyolefin-polyamide copolymer;
(C) optional a tackifying resin;
(D) optional a wax;
(E) optional additives,
wherein based on the total weight of the composition, the weight percent of the polyolefin-polyamide copolymer in the hot melt adhesive composition is 12 to 38 wt%, preferably 15 to 35 wt%, more preferably 18 to 30 wt%.

Preferably, in the hot melt adhesive composition according to the invention, the polyolefin-polyamide copolymer has one or more of the following characters:
the polyolefin-polyamide copolymer is a block copolymer or a graft copolymer, preferably a graft copolymer, preferably a polyamide grafted polyolefin;
the melting point of the polyolefin-polyamide copolymer is 110 to 145°C, preferably 120 to 140°C;

Preferably, in the hot melt adhesive composition according to the invention, the polyolefin-polyamide copolymer has one or more of the following characters:
the polyolefin in the polyolefin-polyamide copolymer has a melt flow index between 3 and 400 g/10 min, preferably 20 to 200 g/10 min at 190°C;
the polyolefin in the polyolefin-polyamide copolymer is an ethylene/alkyl (meth)acrylate copolymer, preferably a maleic anhydride-containing ethylene/alkyl (meth)acrylate copolymer;
the polyamide in the polyolefin-polyamide copolymer is a copolyamide;
the polyolefin-polyamide copolymer contains 5 to 50 wt%, preferably 15 to 30 wt% of the polyamide;
the polyamide has a number average molecular weight between 1000 and 5000 g/mol and more preferably between 2000 and 3000 g/mol.

Preferably, in the hot melt adhesive composition according to the invention, the olefin used for the polymerization of the at least one polyolefin is selected from olefins having 2 to 6 carbon atoms, preferably, the olefin used for the polymerization of the at least one polyolefin is selected from butene, propylene and ethylene, and/or
wherein the at least one polyolefin is an amorphous polyolefin.

Preferably, in the hot melt adhesive composition according to the invention, the at least one polyolefin comprises a first polyolefin A1 and a second polyolefin A2.

More preferably, in the hot melt adhesive composition according to the invention, the first polyolefin A1 has one or more of the following characters:
at least 80 mol%, preferably 100 mol% of the monomers in the first polyolefin A1 are propylene and ethylene,
a softening point of 130 to 160 °C, preferably 140 to 150 °C,
a melt viscosity of 10,000 to 40,000 mPa s, preferably 15,000 to 30,000 mPa s at 190 °C.

More preferably, in the hot melt adhesive composition according to the invention, the second polyolefin A2 has one or more of the following characters:
at least 80 mol%, preferably 100 mol% of the monomers in the second polyolefin A2 are ethylene, propylene and butene,
a softening point of 80 to 120 °C, preferably 98 to 110 °C,
a melt viscosity of 1000 to 8000 mPa s, preferably 1,500 to 4,000 mPa s at 190 °C, and/or
thermal stability under load of 80 to 105 °C, preferably 85 to 100 °C,
the gap between softening point and thermal stability under load is less than 30 °C, preferably less than 25 °C.

More preferably, in the hot melt adhesive composition according to the invention, the weight ratio of the first polyolefin A1 to the second polyolefin A2 is 3:1 to 1:3, preferably 2:1 to 1:2.

Preferably, in the hot melt adhesive composition according to the invention, the at least one polyolefin comprises a polyolefin A3 having one or more of the following characters:
at least 80 mol%, preferably 100 mol% of the monomers in the at least one polyolefin are propylene and ethylene,
a softening point of 110 to 140 °C, preferably 115 to 135 °C,
a melt viscosity of 2,000 to 5,000 mPa s, preferably 2,500 to 4,500 mPa s at 190 °C.

Preferably, in the hot melt adhesive composition according to the invention, the wax has a maleric anhydride grafting of 4 to 10wt%, preferably 5 to 9 wt%.

Preferably, the hot melt adhesive composition according to the invention comprises, based on the total weight of the composition:
(A) 20 to 65 wt%, preferably 25 to 60 wt%, more preferably 35 to 55 wt% of the at least one polyolefin;
(B) 12 to 38 wt%, preferably 15 to 35 wt%, more preferably 18 to 30 wt% of the polyolefin-polyamide copolymer;
(C) 15 to 45 wt% , preferably 20 to 40 wt%, more preferably 20 to 30 wt% of the tackifying resin;
(D) 0 to 10 wt%, preferably 2 to 8 wt%, more preferably 3 to 7 wt% of the wax;
(E) 0 to 2 wt%, preferably 0.05 to 1 wt%,, more preferably 0.05 to 0.5 wt% of the additives.

Preferably, the hot melt adhesive composition according to the invention comprises, based on the total weight of the composition:
(A) 40 to 88 wt%, preferably 45 to 85 wt%, more preferably 60 to 85 wt% of the at least one polyolefin;
(B) 12 to 38 wt%, preferably 15 to 35 wt%, more preferably 15 to 30 wt% of the polyolefin-polyamide copolymer;
(C) 0 to 45 wt%, preferably 0 to 40 wt%, more preferably 0 to 25 wt% of the tackifying resin;
(D) 0 to 10 wt%, preferably 0 to 8 wt%, more preferably 0 to 5 wt% of the wax;
(E) 0 to 2 wt%, preferably 0 to 1 wt%, more preferably 0 to 0.5 wt% of the additives.

In a second aspect, the invention relates to an article comprising at least one substrate and the hot melt adhesive composition according to the present invention.

In a third aspect, the invention relates to use of the hot melt adhesive composition according to the present invention for bonding two substrates, wherein at least one of the two substrates is plastic.

In a fourth aspect, the invention relates to use of the polyolefin-polyamide copolymer for reducing stringing of a hot melt adhesive composition,
wherein
the polyolefin-polyamide copolymer has one or more of the following characters:
the polyolefin-polyamide copolymer is a graft copolymer, preferably a polyamide grafted polyolefin;
the melting point of the polyolefin-polyamide copolymer is 110 to 145°C, preferably 120 to 140°C;
the polyolefin in the polyolefin-polyamide copolymer has a melt flow index between 3 and 400 g/10 min, preferably 20 to 200 g/10 min at 190°C;
the polyolefin in the polyolefin-polyamide copolymer is an ethylene/alkyl (meth)acrylate copolymer, preferably a maleic anhydride-containing ethylene/alkyl (meth)acrylate copolymer;
the polyamide in the polyolefin-polyamide copolymer is a copolyamide;
the polyolefin-polyamide copolymer contains 5 to 50 wt%, preferably 15 to 30 wt% of the polyamide;
the polyamide has a number-average molecular weight between 1000 and 5000 g/mol and more preferably between 2000 and 3000 g/mol;
wherein
the stringing length at break of the hot melt adhesive composition is less than 20 mm, preferably less than 5 mm, and
optionally, wherein
the composition has an optical transmission of more than 80%.

### BRIEF DESCRIPTION OF THE DRAWINGS

Figure 1 illustrates the result of the anti-stringing test performed with the composition of Example 1 according to the present invention.
Figure 2 illustrates the result of the anti-stringing test performed with the composition of Comparative Example 1 according to the present invention.

### DESCRIPTION OF THE INVENTION

### General definitions and terms

The invention is further described in detail below, and it is to be understood that the terms are for the purpose of description but not intended to limit the invention.

The technical and scientific terms used herein have the same meaning as commonly understood by one of ordinary skill in the art to which this invention belongs, unless otherwise indicated. In the event of a conflict, the definition provided in this application shall prevail.

As used herein, the singular forms "a," "an," and "the" are intended to include the plural forms as well, unless the context clearly indicates otherwise. For example, "a wax" has the same meaning as "at least one wax" and "one or more wax", unless the context clearly indicates otherwise.

It will be further understood that the terms "comprising", "comprise(s)" as used herein are synonymous with "including", "include(s)" or "containing", "contains". The terms "comprise(s)" and/or "comprising," or "include(s)" and/or "including" when used in this specification, specify the presence of stated features (members, components, method steps or the like), but do not preclude the presence or addition of one or more other non-recited features.

The recitation of numerical ranges by endpoints includes all integer numbers and, where appropriate, fractions subsumed within that range (e.g. 1 to 5 can include 1, 2, 3, 4, 5 when referring to, for example, a number of elements, and can also include, e.g., 1.5, 2, 2.75 and 3.80, when referring to, for example, content). The recitation of numerical ranges by end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

Preferred features and embodiments of the invention are set herein below. Any feature indicated as being preferred or advantageous may be combined with any other feature or features or statements indicated as being preferred or advantageous.

The various groups, radicals and letters which are included in the formulas described in the present application retain throughout the present text the same definition, unless otherwise stated.

The term "optional" or "optionally" as used herein means that the subsequently described event or circumstance may or may not occur. The description includes the occurrence or non-occurrence of the event or circumstance, as well as the arbitrary selection of the subsequently described content.

Unless otherwise indicated, percentages, parts, and the like herein are provided by weight.

The term "one or more" or "at least one", as used herein, means one, two, three, four, five, six, seven, eight or more.

The term "two or more" as used herein, means two, three, four, five, six, seven, eight or more.

Unless otherwise stated, standards mentioned throughout the present application are those in effect on the date the application is filed.

As used herein, the average molecular weight is the number average molecular weight. The number average molecular weight could be detected by conventional method in the art, for example, by gel permeation chromatography method with polystyrene as calibration.

By "about X", it is intended more or less 10% the value of X.

In this context, the term "polyolefin" refers to the polymer comprising repeating units based on an olefin. Olefins are unsaturated hydrocarbons containing at least one carbon double bond. Preferably, the olefin has 2 to 30 carbon atoms.

In this context, the term "α-olefin" refers to olefin with the double bond at the end of the molecular chain and the molecular formula is R-CH=CH2, where R is an alkyl group.

As used herein, the term "amorphous polyolefin" means the crystallinity of the amorphous polyolefin is less than 20%, e.g., the amorphous polyolefin has a crystallinity of less than 18%, 16%, 14%, 12%, 10%, 8%, 6%, 4%, 2%, or less than 1 %. A "crystallinity" refers to a proportion of a crystalline region in a polymer, expressed in percentage. In the present invention, the crystallinity is determined by a wide-angle X-ray diffraction (WAXD) method. Specifically, by integration based on the WAXD diffraction spectrum, the crystallinity (%) is equal to a ratio of a crystalline diffraction peak area to the sum of the crystalline diffraction peak area and a non-crystalline diffraction peak area multiplied by 100%. The crystallinity is determined by a Bruker D8 ADVANCE DaVinci X-ray diffractometer in the present invention.

In this context, the term "melt flow index" (MFI) is a most common criteria for indicating the flowability of a polymer in a molten state. It could be determined as follows: an amount of a polymer that flows out from a nozzle (orifice) having a prescribed size at a certain pressure and at certain temperature is measured by an extrusion plastometer, and a numerical value in unit of g/10 min is referred to as "melt flow index". Unless otherwise specified, the melt flow index as referred to herein is the number of grams of the polymer which flows out in 10 minutes at 190°C under a load of 2.16 kg in accordance with ISO 1133-2011.

As used herein, unless otherwise specified, melting point could be determined by using differential scanning calorimetry (DSC) in conventional manners, e.g., ISO 11357-1-2009.

As used herein, unless otherwise specified, softening point could be determined by ASTM E 28-2018.

As used herein, unless otherwise specified, melt viscosity could be determined by ASTM D 3236-15 2021 at 190 °C, for example as described in the testing methods of the Examples below.

### (A) At least one polyolefin

The olefin used to form the at least one polyolefin could be an α-olefin or dienes, preferably an α-olefin. Examples of the α-olefin include ethylene, propylene, butene, pentene, 3-methyl-1- butene, hexene, 4-methyl-1-pentene, 3-methyl-1-pentene, octene, decene, dodecene, tetradecene, hexadecene, octadecene, eicosene, docosene, tetracosene, hexacosene, octacosene, triacontane and the isomers thereof. Preferably, the olefin used for the polymerization of the at least one polyolefin is selected from olefins having 2 to 6 carbon atoms, more preferably, the olefin used for the polymerization of the polyolefin is selected from butene, propylene and ethylene.

The at least one polyolefin could be a homopolymer or a copolymer.

The examples of homopolymers include but not limited to propylene, or polyethylene, such as high density polypropylene and low density polypropylene, and combinations thereof.

Preferably, the at least one polyolefin is a copolymer. More preferably, the at least one polyolefin is a copolymer containing propylene and one or more C2-C30 α-olefin co-monomers (preferably one or more C2-C6 α-olefin co-monomers).

As used therein, the term copolymer refers to a polymer containing at least two kinds of olefin monomers in a polymer chain. It includes terpolymer which can comprise at least three different olefin monomers in the polymer chain.

Most preferably, the at least one polyolefin is a copolymer containing propylene and ethylene monomers, or a copolymer containing propylene, ethylene and butene monomers.

Preferably, the at least one polyolefin is an amorphous polyolefin.

The at least one polyolefin may have a melt viscosity at 190°C of 1,000 to 40,000 mPa s, e.g., 2,000, 3,000, 4,000, 20,000, 23,000, 25,000, 30,000 mPa s.

The at least polyolefin may have a softening point of 80°C to 160°C.

The at least one polyolefin may be commercially available, including but not limited to Synthomer, Eastoflex from Eastman, e.g., Synthomer^{®} 42641, Eastoflex^{™} E1200PL, VESTOPLAST@EP V2103 from EVONIK, VESTOPLAST@EP V2094 from EVONIK, VESTOPLAST^{®}792 from EVONIK, Aerafin from Eastman, e.g., Aerafin^{™} 35, Aerafin^{™} 180, Aerafin^{™} 75H.

Based on the total weight of the composition, the total weight percent of the at least one polyolefin(s) may be 20 to 88 wt%, preferably 25 to 85 wt%.

The at least one polyolefin preferably comprises:
- i) a first polyolefin A1 and a second polyolefin A2, the first polyolefin A1 being different from the second polyolefin A2; or
- ii) a polyolefin A3.

### Case i)

Most preferably, the first polyolefin A1 is a copolymer containing propylene and ethylene monomers.

Preferably, at least 80 mol% of the monomers in the first polyolefin A1 are propylene and ethylene. More preferably, at least 90 mol% of the monomers in the first polyolefin A1 are propylene and ethylene. For example, 91, 92, 93, 94 ,95, 96, 97, 98, 99,100 mol% of the monomers in the first polyolefin A1 are propylene and ethylene. In the case of 100 mol%, it means that the first polyolefin A1 is copolymerized by propylene and ethylene.

Preferably, the first polyolefin A1 has a melt viscosity at 190°C of 10,000 to 40,000 mPa s, more preferably 15,000 to 30,000 mPa s.

Preferably, the first polyolefin A1 has a softening point of 130 to 160 °C, more preferably 140 to 150 °C.

Preferably, the second polyolefin A2 is a copolymer containing ethylene, propylene and butene monomers.

Preferably, at least 80 mol% of the monomers in the second polyolefin A2 are ethylene, propylene and butene. More preferably, at least 90 mol% of the monomers in the second polyolefin A2 are ethylene, propylene and butene. For example, 91, 92, 93, 94 ,95, 96, 97, 98, 99,100 mol% of the monomers in the second polyolefin A2 are ethylene, propylene and butene. In the case of 100 mol%, it means that the second polyolefin A2 is copolymerized by ethylene, propene and butene.

Preferably, the second polyolefin A2 has a melt viscosity at 190°C of 1,000 to 8,000 mPa s, more preferably 1,500 to 4,000 mPa s. The melt viscosity here could be detected in conventional manner, for example by a rotational viscosimeter according to DIN 53 019-2008. The second polyolefin A2 may have a number average molecular weight of 5,000 to 20,000 g/mol, preferably 6,000 to 15,000 g/mol, calculated according to GPC, DIN 55672-1-2016.

Preferably, the second polyolefin A2 has a softening point of 80 to 120 °C, more preferably 98 to 110 °C. The softening point could be determined for example according to DIN EN 1427-2007. The second polyolefin A2 may have a thermal stability under load (hereafter referred to as "SAFT") of 80 to 105 °C, preferably 85 to 100 °C.

The SAFT herein could be detected by the method as follows: a drop of the melted composition (180 °C) is placed on one side of the board and is pressed to another grey board (T-form). After 24 h the prepared specimen is placed in a heating cabinet with a weight of 450 g and heated up at a rate of 5°C/h. The SAFT value is the temperature at which the bonded specimen breaks down.

Preferably, the gap between softening point and SAFT is less than 30 °C, preferably less than 25 °C, for example, 3 to 25 °C, e.g., 5, 7, 8, 10, 12, 14, 16, 18, 20, 22, 24, 26, 28, 30 °C. It is found by the inventor that the suitable gap between softening point and SAFT is beneficial for obtaining the product with desired viscosity, softening point and anti-stringing behavior.

Preferably, the weight ratio of the first polyolefin A1 to the second polyolefin A2 is 3:1 to 1:3, preferably 2:1 to 1:2, e.g., 1, 1.5.

Preferably, based on the total weight of the composition, the weight percent of the first polyolefin A1 is 10 to 37 wt%, preferably 13 to 35 wt%, e.g., 20, 25, 30 wt%.

Preferably, based on the total weight of the composition, the weight percent of the second polyolefin A2 is 10 to 28 wt%, preferably 12 to 25 wt%, , e.g., 15, 20, 25 wt%..

Preferably, based on the total weight of the composition, the weight percent of the at least one polyolefin is 20 to 65 wt%, preferably 25 to 60 wt%.

### Case ii)

Most preferably, the at least one polyolefin comprises a polyolefin A3 which is a copolymer containing propylene and ethylene monomers.

Preferably, at least 80 mol% of the monomers in the polyolefin A3 are propylene and ethylene. More preferably, at least 90 mol% of the monomers in the polyolefin A3 are propylene and ethylene. For example, 91, 92, 93, 94 ,95, 96, 97, 98, 99,100 mol% of the monomers in the polyolefin A3 are propylene and ethylene. In the case of 100 mol%, it means that the polyolefin A3 is copolymerized by propylene and ethylene.

Preferably, the polyolefin A3 has a melt viscosity at 190°C of 2,000 to 5,000 mPa s, preferably 2,500 to 4,500 mPa s.

Preferably, the polyolefin A3 has a softening point of 110 to 140 °C, preferably 115 to 135°C.

Preferably, the polyolefin A3 would be helpful in forming a composition with good optical transparency.

Preferably, based on the total weight of the composition, the weight percent of the polyolefin A3 is 40 to 88 wt%, preferably 45 to 85 wt%, e.g., 50, 60, 70, 80 wt%.

### (B) Polyolefin-polyamide copolymer

The polyolefin-polyamide copolymer is a material based on polyamide and polyolefin.

Preferably, the polyolefin-polyamide copolymer is a block copolymer or a graft copolymer, preferably a graft copolymer, more preferably, the polyamide grafted polyolefin.

Preferably, the olefin used to form the polyolefin in the polyolefin-polyamide copolymer comprises an α-olefin. Examples of the α-olefin include ethylene, propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene, 1-docosene, 1-tetracosene, hexacosene, 1-octacosene, and 1-triacontene. the term "α-olefin" also includes styrene herein. Preferably, the α-olefin has 2 to 6 carbon atoms. More preferably, the α-olefin is propylene or ethylene.

In the polyolefin-polyamide copolymer, the polyolefin could be a homopolymer or a copolymer. For example, the polyolefin may be a homopolymer, e.g, polyethylene, or polypropylene.

The polyolefin in the polyolefin-polyamide copolymer may also be a copolymer. when at least two comonomers are copolymerized in the polymer chain, one of the two comonomers known as the "first comonomer" being an α-olefin and the other comonomer, known as the "second comonomer", is a monomer capable of polymerizing with the first monomer. As the second comonomer, mention may be made of:
one of the α-olefins already cited, this being different from the first α-olefin comonomer;
dienes such as, for example, 1,4-hexadiene, ethylidene, norbornene and butadiene;
unsaturated carboxylic acid esters such as, for example, the alkyl acrylates or alkyl methacrylates grouped together under the term alkyl (meth)acrylates. The alkyl chains of these (meth)acrylates may have up to 30 carbon atoms. Mention may be made, as alkyl chains, of methyl, ethyl, propyl, n-butyl, sec-butyl, isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl. Methyl, ethyl and butyl (meth)acrylates are preferred as unsaturated carboxylic acid esters; and
vinyl esters of carboxylic acids. As examples of vinyl esters of carboxylic acids, mention may be made of vinyl acetate, vinyl versatate, vinyl propionate, vinyl butyrate or vinyl maleate. Vinyl acetate is preferred as the vinyl ester of a carboxylic acid.

Advantageously, the polyolefin in the polyolefin-polyamide copolymer comprises at least 50 mol % of the first comonomer. Its density may advantageously be between 0.91 and 0.96.

The preferred polyolefin in the polyolefin-polyamide copolymer is an ethylene/alkyl (meth)acrylate copolymer.

It would not be outside the scope of the invention if various "second comonomers" were copolymerized in the polyolefin of the polyolefin-polyamide copolymer.

Preferably, the polyolefin in the polyolefin-polyamide copolymer contains at least one residue of an unsaturated monomer (X) which may react with an acid and/or amine functional group of the polyamide graft via a condensation reaction. According to the definition of the invention, the unsaturated monomer (X) is not a "second comonomer".

As the unsaturated monomer (X) included in the polyolefin of the polyolefin-polyamide copolymer, mention may be made of:
unsaturated epoxides. Among these, there are, for example, aliphatic glycidyl esters and ethers such as allyl glycidyl ether, vinyl glycidyl ether, glycidyl maleate and glycidyl itaconate, glycidyl acrylate and glycidyl methacrylate. They are also, for example, alicyclic glycidyl esters and ethers such as 2-cyclohexene-1-glycidyl ether, cyclohexene-4,5-diglycidylcarboxylate, cyclohexene-4-glycidylcarboxylate, 5-norbornene-2-methyl-2-glycidylcarboxylate and endocis-bicyclo-[2.2.1]-5-heptene-2,3-diglycidyldicarboxylate. It is preferred to use glycidyl methacrylate as the unsaturated epoxide;
unsaturated carboxylic acids and salts thereof, for example acrylic acid or methacrylic acid and the salts of these same acids; and
carboxylic acid anhydrides. They may be chosen, for example, from maleic, itaconic, citraconic, allylsuccinic, cyclohex-4-ene-1,2-dicarboxylic, 4-methylenecyclohex-4-ene-1,2-dicarboxylic, bicyclo[2.2.1]hept-5-ene-2,3-dicarboxylic and x-methylbicyclo[2.2.1]hept-'5-ene-2,2-dicarboxylic anhydrides. It is preferred to use maleic anhydride as the carboxylic acid anhydride.

The unsaturated monomer (X) is preferably chosen from an unsaturated carboxylic acid anhydride and an unsaturated epoxide. In particular, to carry out the condensation of the polyamide graft with the polyolefin, in the case where the reactive end group of the polyamide graft is a carboxylic acid functional group, the unsaturated monomer (X) is preferably an unsaturated epoxide. In the case where the reactive end group of the polyamide graft is an amine functional group, the unsaturated monomer (X) is advantageously an unsaturated epoxide and preferably an unsaturated carboxylic acid anhydride.

Preferably, the unsaturated monomer (X) is maleic anhydride. The preferred polyolefin in the polyolefin-polyamide copolymer is a maleic anhydride-containing ethylene/alkyl (meth)acrylate copolymer.

According to one advantageous version of the invention, the preferred number of unsaturated monomers (X) attached, on average, to the polyolefin of the polyolefin-polyamide copolymer is greater than or equal to 1.3 and/or preferably less than or equal to 10.

Thus, when (X) is maleic anhydride and the number-average molecular weight of the polyolefin is 15 000 g/mol, it is found that this corresponds to an anhydride proportion of at least 0.8% and at most 6.5% by weight of the polyolefin.

The polyolefin containing the residue of the unsaturated monomer (X) is typically obtained by polymerization of the monomers (first comonomer, optional second comonomer, and optionally unsaturated monomer (X)). This polymerization may be carried out by a high-pressure free-radical process or a process in solution, in an autoclave or tubular reactor, these processes and reactors being well known to a person skilled in the art. When the unsaturated monomer (X) is not copolymerized in the polyolefin backbone, it is grafted to the polyolefin backbone. The grafting is also an operation that is known *per se.* The composition would be in accordance with the invention if several different functional monomers (X) were copolymerized with and/or grafted to the polyolefin backbone.

Preferably, based on the total weight of the polyolefin in the polyolefin-polyamide copolymer, the polyolefin is a copolymer containing the monomers of
55 to 90 wt%, preferably 65 to 85 wt% of the first comonomer,
5 to 35 wt%, preferably 12 to 30 wt% of the second comonomer, and
1 to 10 wt%, preferably 1.5 to 5 wt% of unsaturated monomer (X).

Preferably, the polyolefin in the polyolefin-polyamide copolymer has a melt flow index between 3 and 400 g/10 min, preferably 20 to 200 g/10 min, e.g., 50, 70, 100, 150 g/10 min (190° C./2.16 kg, ASTM D 1238).

Preferably, the polyolefin in the polyolefin-polyamide copolymer has a melting point less than or equal to 100° C, or the polyolefin in the polyolefin-polyamide copolymer does not have a melting point.

The polyamide in the polyolefin-polyamide copolymer may be either homopolyamide or copolyamide.

Preferably, the polyamide is aliphatic homopolyamide which result from the polycondensation:
of a lactam;
or of an aliphatic α,ω-aminocarboxylic acid;
or of an aliphatic diamine and an aliphatic diacid.

As examples of a lactam, mention may be made of caprolactam, oenantholactam and lauryllactam.

As examples of an aliphatic α,ω-aminocarboxylic acid, mention may be made of aminocaproic acid, 7-aminoheptanoic acid, 11-aminoundecanoic acid and 12-aminododecanoic acid.

As examples of an aliphatic diamine, mention may be made of hexamethylenediamine, dodecamethylenediamine and trimethylhexamethylenediamine.

As examples of an aliphatic diacid, mention may be made of adipic, azelaic, suberic, sebacic and dodecane-dicarboxylic acids.

Among the aliphatic homopolyamide, mention may be made, by way of example and non-limitingly, of the following polyamides: polycaprolactam (PA-6); polyundecanamide (PA-11, sold by Arkema under the brand RILSAN^{®}); polylauryllactam (PA-12, also sold by Arkema under the brand RILSAN^{®}); polybutylene adipamide (PA-4,6); polyhexamethylene adipamide (PA-6,6); polyhexamethylene azelamide (PA-6,9); polyhexamethylene sebacamide (PA-6,10); polyhexamethylene dodecanamide (PA-6,12); polydecamethylene dodecanamide (PA-10,12); polydecamethylene sebacamide (PA-10,10) and poly-dodecamethylene dodecanamide (PA-12,12).

Preferably, the polyamide is cycloaliphatic homopolyamide.

Mention may especially be made of the cycloaliphatic homopolyamide which result from the condensation of a cycloaliphatic diamine and an aliphatic diacid.

As an example of a cycloaliphatic diamine, mention may be made of 4,4'-methylenebis(cyclohexylamine), also known as para-bis(aminocyclohexyl)methane or PACM, 2,2'-dimethyl-4,4'-methylenebis(cyclohexylamine), also known as bis(3-methyl-4-aminocyclohexyl)methane or BMACM.

Thus, among the cycloaliphatic homopolyamide, mention may be made of the polyamides PA-PACM,12 that results from the condensation of PACM with the C12 diacid, PR-BMACM,10 and PA-BMACM,12 that result from the condensation of BMACM with, respectively, C10 and C12 aliphatic diacids.

Preferably, the polyamide is semiaromatic homopolyamide that result from the condensation:
of an aliphatic diamine and an aromatic diacid, such as terephthalic acid (T) and isophthalic acid (I). The polyamides obtained are then commonly known as "polyphthalamides" or PPAs; and
of an aromatic diamine, such as xylylene-diamine, and more particularly meta-xylylene-diamine (MXD) and an aliphatic diacid.

Thus, non-limitingly, mention may be made of the polyamides PA-6,T, PA-6,I, PA-MXD,6 or else PA-MXD,10.

More preferably, the polyamide used in the polyolefin-polyamide copolymer is copolyamide. These result from the polycondensation of at least two of the groups of monomers mentioned above used for obtaining homopolyamide.

The copolyamide especially covers the condensation products of:
at least two lactams;
at least two aliphatic α,ω-aminocarboxylic acids;
at least one lactam and at least one aliphatic α,ω-aminocarboxylic acid;
at least two diamines and at least two diacids;
at least one lactam with at least one diamine and at least one diacid;
at least one aliphatic α,ω-aminocarboxylic acid with at least one diamine and at least one diacid,
the diamine(s) and the diacid(s) possibly being, independently of one another, aliphatic, cycloaliphatic or aromatic.

Particularly, polyamide may be PA-6/11, PA-6/12 or PA-6/11/12.

Advantageously, the polyamide graft has one end group having an amine functionality. The preferred monofunctional polymerization limiters are laurylamine and oleylamine. The condensation reaction of the polyamide graft on the polyolefin containing the residue of (X) is typically carried out by reaction of one amine or acid functional group of the polyamide graft with the residue of (X). Advantageously, monoamine polyamide grafts are used and amide or imide bonds are created by reacting the amine functional group with the functional group of the residue of (X). The grafting of polyamide on the polyolefin is described in US20110091707A1.

Advantageously, the polyolefin-polyamide copolymer contains 5 to 50 wt% of the polyamide, preferably15 to 30 wt%. The polyamide has a number average molecular weight between 1000 and 5000 g/mol and more preferably between 2000 and 3000 g/mol. Preferably, it is thus possible to blend the polyamide graft and the polyolefin backbone in an extruder at a temperature generally between 200 and 300° C. The average residence time of the molten material in the extruder may be between 5 seconds and 5 minutes, and preferably between 20 seconds and 1 minute.

It is found by the inventor that the suitable melting point of the polyolefin-polyamide copolymer would be beneficial for providing the composition with desired properties. The melting point of the polyolefin-polyamide copolymer is preferably 110 to 145°C, more preferably 120 to 140°C, most preferably 125 to 135 °C.

Preferably, the melt flow index of the polyolefin-polyamide copolymer is 1 to 50 g/10 min.

Preferably, based on the total weight of the composition, the weight percent of the polyolefin-polyamide copolymer is 12 to 38 wt%, more preferably 15 to 35 wt%, even more preferably 18 to 30 wt%, e.g., 15, 16, 17, 18, 19, 20, 21, 22, 23, 24, 25, 26, 27, 28, 29, 30, 31, 32, 33, 34, 35 wt%. The suitable weight percent of the polyolefin-polyamide copolymer is advantageously beneficial for providing the composition with good anti-stringing behavior and desired viscosity.

### (C) Tackifying resin

The tackifying resins or tackifiers which are used in the hot melt adhesive composition of the present invention are those which are compatible with the polymers.

Most common tackifying resins are obtained by polymerizing C5 or C9 streams from a petroleum feedstock, or combinations of them together or with other monomers, from natural sources or resulting from a chemical process. Tackifying resins from the C5 streams are called aliphatic resins, while those from the C9 stream or from pure monomers of C9 or C10 configuration or from derivatives or mixtures thereof are called aromatic resins. The C5 stream can be composed of linear or cyclic monomers, or combinations thereof. Also, an aliphatic resin can be obtained by hydrogenation of a polymerized aromatic feedstock. Hydrogenation can also be partial, so that part of the monomers keeps their aromatic function in the polymer chain, while some become aliphatic. Any combination can be made in terms of monomer composition and hydrogenation process, in order to have aliphatic or aromatic resins, or to have any incremental point between a substantially aliphatic and a substantially aromatic tackifying resin. Also, an aromatic-modified aliphatic resin is a term that encompasses both cases when some quantity of C9 monomers are polymerized with a major part of C5 monomers, or when a C9 stream is polymerized, then hydrogenated in a way that most of the monomer's aromatic functions become aliphatic. Similarly, one would use the term aliphatic-modified aromatic resin when appropriate. Other types of monomers can enter into the composition of such resin's polymeric chain.

In this context, suitable classes of tackifying resin include, e.g., aromatic, aliphatic and cycloaliphatic hydrocarbon resins, mixed aromatic and aliphatic modified hydrocarbon resins, aromatic-modified aliphatic hydrocarbon resins, and hydrogenated versions thereof; terpenes, modified terpenes and hydrogenated versions thereof; natural rosins, modified rosins, rosin esters, and hydrogenated versions thereof; low molecular weight polylactic acid; and combinations thereof. Examples of useful natural and modified rosins include gum rosin, wood rosin, tall oil rosin, distilled rosin, hydrogenated rosin, dimerized rosin and polymerized rosin. Examples of useful rosin esters include e.g., glycerol esters of pale wood rosin, glycerol esters of hydrogenated rosin, glycerol esters of polymerized rosin, pentaerythritol esters of natural and modified rosins including pentaerythritol esters of pale wood rosin, pentaerythritol esters of hydrogenated rosin, pentaerythritol esters of tall oil rosin, and phenolic-modified pentaerythritol esters of rosin. Preferably, the tackifying resin is hydrocarbon resin, more preferably a hydrogenated hydrocarbon resin, most preferably a hydrogenated aliphatic hydrocarbon resin.

Preferably, the softening point of the tackifying resin used in the present invention is 100 to 160 °C, more preferably 120 to 150 °C, determined by ASTM D6090.

The number average molecular weight of the tackifying resin is preferably from 230 to 1000 g/mol, more preferably 250 to 800 g/mol. The melt viscosity is 600 to 3000 mPa s, preferably 800 to 2000 mPa s at 190 °C.

The tackifying resin may be commercially available, for example, it can be Eastotac^{™} H-130W (from Eastman), or SU-130 (from KOLON).

### (D) Wax

The presence of the wax makes it possible to reduce the melt viscosity of the hot-melt adhesives without appreciably decreasing their adhesive bonding characteristics. The wax used in this invention typically include but not limited to:
(1) Low molecular weight, that is, 100-6000 g/mol, polyethylene having a hardness value, as determined by ASTM method D-1321, of from about 0.1 to 120,
(2) Petroleum waxes such as paraffin wax having a melting point of from about 130° to 170° F and microcrystalline wax having a melting point of from about 135° to 200° F, the latter melting point being determined by ASTM method D 127-60;
(3) atactic polypropylene having a Ring and Ball softening point of from about 120°C to 160° C;
(4) metallocene catalyzed propylene-based wax like those commercialized by Clariant under the name "Liocene".
(5) metallocene catalyzed wax or single-site catalyzed wax.
(6) synthetic waxes made by polymerizing carbon monoxide and hydrogen such as Fischer-Tropsch wax; and
(7) polyolefin waxes. As used herein, the term "polyolefin wax" refers to those polymeric or long-chain entities comprised of olefinic monomer units. Optionally, the polymer may be modified by acid anhydrides, e.g., grafted by maleic anhydride, and thus the polyolefin waxes could be for example polypropylene grafted by maleic anhydride.

Preferably, the wax according to the invention has a maleric anhydride grafting of 4 to 10 wt%, preferably 5 to 9 wt%. The "maleric anhydride grafting" herein means the weight percentage of maleric anhydride grafted in the wax.

Preferably, the wax according to the invention has a drop point of 130 to 165°C, more preferably 135 to 155 °C. The drop point could be detected by method conventional in the art.

The wax is commercially available, for example, it can be A-C°597P(from Honeywell), 907P (from Honeywell), Licocene^{®} PP MA 7452 (from Clariant), Epolene^{®} E-43 (from Westlake).

### (E) Additives

One or more additives could be added into the hot melt adhesive composition according to the invention. The additives include stabilizer, plasticizer, filler and the like.

The stabilizers which are useful in the hot-melt adhesive composition of the present invention are incorporated to help protect the polymers noted above, and thereby the total adhesive system from the effects of thermal and oxidative degradation which normally occurs during the manufacture and application of the adhesive, as well as in the ordinary exposure of the final product to the ambient environment. Examples of stabilizers includes but not limited to phenol-based antioxidants, sulfur-based antioxidants, phosphorus-based antioxidants, lactone-based stabilizers, benzotriazole-based ultraviolet absorbing agents and benzophenone -based ultraviolet absorbing agents. These may be used alone or in combination. The antioxidants are commercially available, for example, it can be Irganox^{®} 1010 (from BASF), CHINOX^{®} 168 (from DBC).

The plasticizer is typically blended for the purposes of reducing the melt viscosity of the composition, providing flexibility to the composition. The plasticizer is not particularly limited as long as it is compatible with other components, and the composition having the effect of the present invention can be obtained. A suitable plasticizer may be selected from the group consisting of usual plasticizing oils, such as mineral oils, but also olefin oligomers and low molecular weight polymers, as well as vegetable and animal oils and derivatives of such oils. The petroleum derived oils which may be employed are relatively high boiling materials containing only a minor proportion of aromatic hydrocarbons. The oligomers may be polypropylenes, polybutenes, hydrogenated polyisoprenes, hydrogenated polybutadienes, or the like having an average molecular weight between 350 and 10,000 g/mol. Suitable vegetable and animal oils include glycerol esters of the usual fatty acids and polymerization products thereof.

The filler is not particularly limited as long as the composition having the effect of the present invention can be obtained. Examples of the filler include mica, calcium, carbonate, kaolin, talc, titanium oxide, diatomaceous earth, a urea based resin, styrene beads, fired clay and starch.

### Hot melt adhesive composition

In one embodiment, the hot melt adhesive composition of the present invention comprises, based on the total weight of the composition:
(A) 20 to 65 wt% of the at least one polyolefin;
(B) 12 to 38 wt% of the polyolefin-polyamide copolymer;
(C) 15 to 45 wt% of the tackifying resin;
(D) 0 to 10 wt% of the wax;
(E) 0 to 2 wt% of the additives.

Preferably, the hot melt adhesive composition of the present invention comprises, based on the total weight of the composition:
(A) 25 to 60 wt% of the at least one polyolefin;
(B) 15 to 35 wt% of the polyolefin-polyamide copolymer;
(C) 20 to 40 wt% of the tackifying resin;
(D) 2 to 8 wt% of the wax;
(E) 0.05 to 1 wt% of the additives.

More preferably, the hot melt adhesive composition of the present invention comprises, based on the total weight of the composition:
(A) 35 to 55 wt% of the at least one polyolefin;
(B) 18 to 30 wt% of the polyolefin-polyamide copolymer;
(C) 20 to 30 wt% of the tackifying resin;
(D) 3 to 7 wt% of the wax;
(E) 0.05 to 0.5 wt% of the additives.

Preferably, the hot melt adhesive composition has one or more of the following characterizations:
i) softening point of 120 to 155 °C, preferably 135 to 150 °C,
ii) melt viscosity of 8,000 to 40,000 mPa s, preferably 10,000 to 35,000 mPa s at 190 °C,
iii) open time of 10 to 100s, preferably 20 to 70s,
iv) setting time of 20 to 50s, preferably 30 to 50s,
v) stringing length at break of less than 20 mm, preferably less than 5 mm.

In another embodiment, the hot melt adhesive composition of the present invention comprises, based on the total weight of the composition:
(A) 40 to 88 wt% of the at least one polyolefin;
(B) 12 to 38 wt% of the polyolefin-polyamide copolymer;
(C) 0 to 45 wt% of the tackifying resin;
(D) 0 to 10 wt% of the wax;
(E) 0 to 2 wt% of the additives.

Preferably, the hot melt adhesive composition of the present invention comprises, based on the total weight of the composition:
(A) 45 to 85 wt% of the at least one polyolefin;
(B) 15 to 35 wt% of the polyolefin-polyamide copolymer;
(C) 0 to 40 wt% of the tackifying resin;
(D) 0 to 8 wt% of wax;
(E) 0 to 1 wt% of the additives.

More preferably, the hot melt adhesive composition of the present invention comprises, based on the total weight of the composition:
(A) 60 to 85 wt% of the at least one polyolefin;
(B) 15 to 30 wt% of the polyolefin-polyamide copolymer;
(C) 0 to 25 wt% of the tackifying resin;
(D) 0 to 5 wt% of the wax;
(E) 0 to 0.5 wt% of the additives.

Preferably, the hot melt adhesive composition has one or more of the following characterizations:
i) softening point of 110 to 150 °C, preferably 120 to 130 °C,
ii) stringing length at break of less than 20 mm, preferably less than 5 mm,
iii) optical transmission of more than 80% under the wavelength of 300 to 950nm.

In this context, the stringing length at break is the length of the stringing after applying the composition to the substrate. The stringing could be tested for example by the method listed in the Examples.

The hot melt adhesive composition according to the invention has advantageously excellent anti-stringing behavior. The hot melt adhesive composition has advantageously good bonding strength and anti-creep behavior.

### Method

The hot-melt adhesive composition of the present invention may be formulated by using any of the mixing techniques known in the art. A representative example involves:
i) adding the at least one polyolefin, the polyolefin-polyamide copolymer and the optional antioxidants into a reactor,
ii) adding tackifying resin and wax subsequently,
iii) continuing mixing until a consistent and uniform mixture is formed.

Preferably, stirring is performed in each step. The duration for stirring is that commonly used in the art. For example, the stirring may be performed for 30 mins to 1h after the at least one polyolefin, the polyolefin-polyamide copolymer and the antioxidants are added. The stirring may be performed for 40 mins to 1h after all the raw materials are added into the reactor. The total duration for the stirring may be performed for 1 to 4h

Preferably, the temperature is set in a range of 150 to 210°C in step i) in order to melt the content therein.

Preferably, the reactor is a kettle or an extruder.

Preferably, the raw materials in each step could be added one by one or all at once. For example, in step i), the at least one polyolefin, the polyolefin-polyamide copolymer and the antioxidants may be added into the reactor together, with an optional premixing therebefore; or part of the at least one polyolefin, the polyolefin-polyamide copolymer and antioxidants may be added in to the reactor first, and then adding the rest of them, or the at least one polyolefin and the antioxidants may be added first, followed by the polyolefin-polyamide copolymer.

During the preparation, the other additives could be added optionally. There is no particular limitation on timing of the addition of the additives to the hot melt adhesive composition, as long as the hot melt adhesive composition can be obtained. For example, the additives may be added, together with the polyolefin-polyamide copolymer in step i). Alternatively, the additives may be added after step ii).

### Article and use

The present invention also concerns an article comprising at least one substrate and a hot melt adhesive composition according to the present invention.

The substrate may comprise nonwoven fabric, tissue, absorbent fluff, super absorbent polymer (SAP), composite material, plastics which may be elastomeric or non-elastomeric. Preferably, the substrate is a low surface energy substrate, e.g., with the surface energy of less than 45mJ/m², preferably less than 35mJ/m², e.g., 30-32mJ/m². For example, the substrate could be selected from styrenic block copolymers (SBC), polyethylene terephthalate (PET), polycarbonate (PC), acrylonitrile butadiene styrene copolymer (ABS), polyurethane, polyolefin, polyamide, polyformaldehyde, polyphenylene ether, thermoplastic polyester, polyimide, polyphenylene sulfide, polysulfone, polyarylate, polyphenylene ester, polyarylene ether ketone, fluororesin and any mixture thereof. Preferably, the substrate is a plastic. More preferably, the substrate comprises polypropylene (PP), polyethylene (PE), polyethylene terephthalate (PET), polycarbonate (PC), acrylonitrile butadiene styrene copolymer (ABS).

The invention also relates to the use of the hot melt adhesive composition as described above, for bonding two substrates. In this case, the process of manufacturing an assembly product (or laminate) may comprise:
i') heating the hot-melt adhesive composition according to the invention, e.g. at a temperature ranging from 130°C to 180°C, for at least a period of time long enough to render the hot melt adhesive composition liquid enough to be applied on a substrate (for example at least two hours), then
ii') coating said composition on a first substrate, then
iii') putting into contact the coated surface of the first substrate with the surface of a second substrate, so as to form an adhesive joint bonding the two substrates.

The substrates may be different or of same nature, with various forms (layer or film, strands, fluff).

Preferably, each substrate may be chosen independently from one another among the above-mentioned substrates.

The hot melt adhesive composition according to the invention may be coated or applied with a variety of application techniques known in the art, which includes contact type application (such as slot die coating) and non-contact type application (such as spraying or fiberization).

The present invention also relates to the use of the hot melt adhesive composition according to the invention for bonding two substrates, wherein at least one of the two substrates is plastic.

The present invention also concerns the use of the polyolefin-polyamide copolymer according to the invention for reducing stringing of a hot melt adhesive composition. Preferably, the stringing length at break of the hot melt adhesive composition is less than 20 mm, preferably less than 5 mm. Preferably, the composition has an optical transmission of more than 80%. The presence of the polyolefin-polyamide copolymer in the hot melt adhesive composition advantageously makes it possible to limit or even avoid stringing during the application of the composition on the surface of the substrate, which facilitates to obtain products of good quality without causing issues during the manufacturing process.

### Beneficial effects

The hot melt adhesive composition according to the invention has advantageously excellent anti-stringing behavior, good anti-creep behavior and bonding strength, especially for bonding plastics, which could be widely used in automotive, assembly, electronic and wood working industry. The adhesive composition also has advantageously relatively low viscosity and suitable softening point, desired open time and setting time, which is not only cost saving and energy saving, but also convenient in processing and thus time saving.

### EXAMPLES

The present invention will be described below by way of Examples and Comparative Examples. However, the present invention is not limited to these Examples as long as the present invention does not depart from the scope of the present invention.

### Testing methods

Softening point, tested according to ASTM E-28-2018
Melt viscosity, tested using Brookfield according to ASTM D 3236-15 2021 at 190°C
Open time: the adhesive composition was coated to the first substrate to be 100 µm at 180 °C, a second substrate -- a paper board strip (25 mm width) -- was pasted and maintained under pressure (by hand) for 1 second. When the adhesive composition was completely not able to bond the paper, the open time was recorded.
Setting time: the adhesive composition was coated to the first substrate to be 100µm at 180 °C, a second substrate -- a paper board strip (25 mm width) -- was pasted and maintained under pressure (by hand) for 1 second. When the paper board strip has at least 50% substrate failure, the setting time was recorded.

### Anti-stringing test:

Using a Nordson hot melt applicator 3500V, the hot melt adhesive composition was melted at 180°C and then was discharged horizontally for a certain period of time. The diameter of the nozzle was 0.35 mm /2 orifices and the temperature of the nozzle is 180°C. The temperature of the hose and the tank comprising the hot-melt adhesive composition is also 180°C. The discharge interval was ON 0.1 seconds · OFF 1.5 seconds.

A white paper was placed at a distance of 5 cm away from the nozzle tip. The discharge time of the hot-melt adhesive composition was 10 minutes and the discharge pressure was 0.25 MPa.

An airflow was generated near the nozzle in a direction parallel to the white paper and with a wind speed of 1.8 to 2 m/s. The environmental temperature was 25 °C.

The state of the thread spun from the hot melt adhesive adhering to the white paper was observed, according to the following rating:
Excellent: Stringing length at break of less than 5 mm
Good: Stringing length at break of 5 to 20 mm
Bad: Stringing length at break of more than 20mm.

### Bonding strength test:

i) cutting two specimens (PP sheet/PP sheet) with the specification of 25*100mm,
ii) bonding the two specimens together vertically up and down using the hot melt adhesive composition in a bonding area of 25*25 with a thickness of 2 mm,
iii) measuring the shear strength after 1 day using universal testing machine for 180° peeling test under different temperatures.

### Anti-creep test:

### a) Anti-creep A test:

i) cutting two specimens (PP sheet/PP sheet) having a thickness of 2mm with the specification of 25*100mm,
ii) bonding the two specimens together vertically un and down using the hot melt adhesive composition in a bonding area of 25*25 with a thickness of 2 mm,
iii) hanging a 500g load in the specimen below for 24h with different temperature to see whether there is any displacement between the two specimens.

The state of the displacement was recorded, according to the following rating:
0 mm: no displacement
NG: the specimen hanging the load debonded from the other specimen.

### b) Anti-creep B test:

i) cutting two specimens having a thickness of 2mm (PP sheet/PP foam) with the specification of 25*100mm,
ii) bonding the two specimens together vertically un and down using the hot melt adhesive composition in a bonding area of 25*90 with an adhesive consumption of 100g/m²,
iii) hanging a 100g load in the specimen below for 24h with different temperatures to see whether there is any displacement between the two specimens.

The state of the displacement was recorded, according to the following rating:
0 mm: no displacement
NG: the specimen hanging the load debonded from the other specimen.

### Optical transmission test:

The adhesive composition is coated to release paper with 50µm thickness. when the temperature drops to room temperature, peel off the adhesive composition from release paper and cut the adhesive composition into 5cm* 5cm, put the cut film under the Optical transmission meter to measure the optical transmission according to JJG1225-2009, JJG 178-2007.

### Raw materials

Raw materials of the hot melt adhesive compositions used in Examples and Comparative Examples are shown in Table 1 below.

**Table 1**

| Raw Material | Supplier | Detailed information |
|---|---|---|
| Synthomer^{®} 42641 | Eastman | amorphous polyolefin copolymer of propylene and ethylene, with softening point of 145°C, melt viscosity at 190°C of 23,000 mPa s |
| VESTOPLAST^{®}EP V2103 | Evonik | amorphous polyolefin, copolymer of ethylene, propylene and butene with melt viscosity at 190°C of 2,000-3,000 mPa.s, softening point of 100-106 °C, SAFT of 90-95°C, number average molecular weight of 8,500 g/mol |
| SUNVISTA^{®} 6150 | Sunvista | amorphous polyolefin, biopolymer or terpolymer of ethylene, propylene and butene, with melt viscosity at 190°C of 8,0000-14,0000 mPa.s, softening point of 106-118 °C, SAFT of 95 °C. |
| Aerafin^{™} 35 | Eastman | amorphous polyolefin, copolymer of ethylene and propylene, with melt viscosity at 190°C of 3,000-4,000 mPa.s, softening point of 118-130 °C. |
| Polyamide grafted polyolefin | | LOTADER^{®} 7500: copolymer of ethylene, of ethyl acrylate (17.5 wt %) and of maleic anhydride (2.8 wt %) produced by Arkema having an MFI of 70 g/10 min (190° C./2.16 kg measured according to ASTM D 1238) and a Tm equal to 85° C. |
| | | PA-6/12: copolyamide of caprolactam and of lauryllactam comprising 80 wt % of lauryllactam and 20 wt % of caprolactam. This copolyamide is primary amine monofunctionalized, has a number-average molecular weight of 2500 g/mol and has a Tm equal to 145° C. |
| | | polyamide grafted polyolefin was prepared as follows: |
| | | LOTADER^{®} 7500 (80wt%) and PA-6/12 (20wt%) were mixed and extruded at 240° C., at 300 rpm with a screw having an LID dimension equal to 44. The polyamide grafted polyolefin has melting point of 130°C |
| Eastotac^{™} H-130W | Eastman | Tackifying resin, with melt viscosity at 190°C of 1,200 mPa.s, softening point of 130 °C, number average molecular weight of 480 g/mol |
| A-C^{®}597P | Honeywell | Wax with 7 wt% maleic anhydride grafting, drop point of 141 °C. |
| Irganox^{®} 1010 | BASF | Antioxidant |
| CHINOX^{®} 168 | DBC | Antioxidant |

The adhesive compositions of Examples and Comparative Examples are prepared as follows with the amount of the raw materials listed in Table 2:
i) Polyolefin(s), polyolefin-polyamide copolymer and antioxidants were added into a kettle which was heated to 180°C. Stirring was performed for 45 min.
ii) Tackifying resin and wax were added subsequently. Stirring was performed for 45 min until a consistent and uniform mixture was formed.

**Table 2**

| Raw material (g) | E1 | E2 | E3 | CE1 | CE2 | CE3 | CE4 | CE5 |
|---|---|---|---|---|---|---|---|---|
| Synthomer^{®} 42641 | 30 | 20 | | 30 | 40 | 35 | 20 | 10 |
| VESTOPLAST@EP V2103 | 20 | 20 | | 20 | 25 | 25 | 10 | 10 |
| SUNVISTA^{®} 6150 | | | | 20 | | | | |
| Aerafin 35 | | | 80 | | | | | |
| Polyamide grafted polyolefin | 20 | 30 | 20 | | 5 | 10 | 40 | 50 |
| Eastotac^{™} H-130W | 25 | 25 | | 25 | 25 | 25 | 25 | 25 |
| Honeywell A-C^{®}597P | 5 | 5 | | 5 | 5 | 5 | 5 | 5 |
| Irganox ^{®}1010 | 0.1 | 0.1 | 0.1 | 0.1 | 0.1 | 0.1 | 0.1 | 0.1 |
| Chinox^{®}168 | 0.1 | 0.1 | 0.1 | 0.1 | 0.1 | 0.1 | 0.1 | 0.1 |

The testing results are shown in Tables 3 to 6.

**Table 3**

| | E1 | E2 | E3 | CE1 | CE2 | CE3 | CE4 | CE5 |
|---|---|---|---|---|---|---|---|---|
| Softening point | 141.8 | 140.6 | 124.5 | 140 | 139.3 | 139. 6 | 145.9 | 167.3 |
| Melt Viscosity (190 °C, mPa s) | 14350 | 27050 | 2675 | 11280 | 7250 | 9325 | 221500 | 178300 |
| Open time (s) | 50 | | | 80-90 | | | | |
| Setting time (s) | 45 | | | 30-40 | | | | |
| Anti-Stringing | Excell ent | Excell ent | Excell ent | Bad | Bad | Bad | Excelle nt | Excelle nt |
| Stringing length at break | <2 mm | <3 mm | <3 mm | > 20mm | > 20mm | > 20m m | <5 mm | <5 mm |
| Optical transmissi on | | | 380-760nm 90%, 940 nm 90.5%, 365 nm 83.1% | | | | | |

**Table 4**

| Anti-creep A test: | | | | |
|---|---|---|---|---|
| | 100 °C, 500g,24h | 110 °C, 500g,24h | 120 °C, 500g,24h | 130 °C, 500g,24h |
| CE1 | 0 | NG | / | / |
| E1 | 0 | 0 | 0 | NG |

**Table 5**

| Anti-creep B test: | | |
|---|---|---|
| | 80°C,100g, 24h | 100°C,100g, 24h |
| CE1 | 0 mm | NG |
| E1 | 0 mm | NG |

**Table 6**

| Bonding strength test | | |
|---|---|---|
| | Shear strength | |
| | 25 °C | 90 °C |
| CE1 | 2.45Mpa/AF* | 0.28MPa/aF |
| E1 | 3.25MPa/SF** | 0.48MPa/AF |

| | | |
|---|---|---|
| * AF adhesive failure ** SF substrate failure | | |

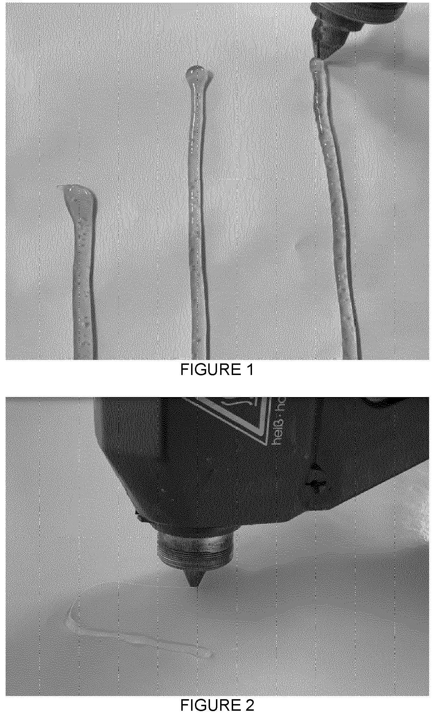

The results show that in E1 and E2, with the addition of the polyolefin-polyamide copolymer, the hot melt adhesive composition has excellent anti-stringing behavior, suitable melt viscosity and softening point, desired open time and setting time. Compared with the composition without adding the polyolefin-polyamide copolymer (CE1), the composition with adding the polyolefin-polyamide copolymer (E1) has much shorter stringing length (shown in Figure 1 and Figure 2), better anti-creep behavior (Table 4) and better bonding strength (Table 6, E1 has higher shear strength).

The results of CE2 to CE3 show that the weight percent of polyolefin-polyamide copolymer at low levels are not suitable for providing the composition with anti-stringing behavior. The results of CE4 to CE5 show that the weight percent of polyolefin-polyamide copolymer at high levels have extremely high melt viscosity, which result in hard-to-melt final products.

As is shown in Table 3, the composition of E3 has high optical transmission besides excellent anti-stringing behavior, suitable melt viscosity and softening point, desired open time and setting time. The transmittance is larger than 80% in the wavelength from 362 nm to 940 nm. When the composition of E3 was applied on a transparent film, the reference object set below the film, as well as the characters printed on the said reference object, could be clearly seen, and there was not any obvious difference in transparency before and after applying the composition to the transparent film. It shows that the composition of the invention has promising application in optical related application for its high transparency.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A hot melt adhesive composition comprising:
(A) at least one polyolefin;
(B) a polyolefin-polyamide copolymer;
(C) optional a tackifying resin;
(D) optional a wax;
(E) optional additives,
wherein based on the total weight of the hot melt adhesive composition, the weight percent of the polyolefin-polyamide copolymer in the hot melt adhesive composition is 12 to 38 wt%, preferably 15 to 35 wt%, more preferably 18 to 30 wt%.

2. The hot melt adhesive composition according to claim 1, wherein the polyolefin-polyamide copolymer has one or more of the following characters:
the polyolefin-polyamide copolymer is a block copolymer or a graft copolymer, preferably a graft copolymer, preferably a polyamide grafted polyolefin;
the melting point of the polyolefin-polyamide copolymer is 110 to 145°C, preferably 120 to 140°C.

3. The hot melt adhesive composition according to claim 1 or 2, wherein the polyolefin-polyamide copolymer has one or more of the following characters:
the polyolefin in the polyolefin-polyamide copolymer has a melt flow index between 3 and 400 g/10 min, preferably 20 to 200 g/10 min at 190°C;
the polyolefin in the polyolefin-polyamide copolymer is an ethylene/alkyl (meth)acrylate copolymer, preferably a maleic anhydride-containing ethylene/alkyl (meth)acrylate copolymer;
the polyamide in the polyolefin-polyamide copolymer is a copolyamide; the polyolefin-polyamide copolymer contains 5 to 50 wt%, preferably 15 to 30 wt% of the polyamide;
the polyamide has a number average molecular weight between 1000 and 5000 g/mol and more preferably between 2000 and 3000 g/mol.

4. The hot melt adhesive composition according to any of claims 1 to 3, wherein the olefin used for the polymerization of the at least one polyolefin is selected from olefins having 2 to 6 carbon atoms, preferably, the olefin used for the polymerization of the at least one polyolefin is selected from butene, propylene and ethylene, and/or
wherein the at least one polyolefin is an amorphous polyolefin.

5. The hot melt adhesive composition according to any of claims 1 to 4, wherein the at least one polyolefin comprises a first polyolefin A1 and a second polyolefin A2.

6. The hot melt adhesive composition according to claim 5, wherein the first polyolefin A1 has one or more of the following characters:
at least 80 mol%, preferably 100 mol% of the monomers in the first polyolefin A1 are propylene and ethylene,
a softening point of 130 to 160 °C, preferably 140 to 150 °C,
a melt viscosity of 10,000 to 40,000 mPa s, preferably 15,000 to 30,000 mPa s at 190 °C.

7. The hot melt adhesive composition according to claim 5 or 6, wherein the second polyolefin A2 has one or more of the following characters:
at least 80 mol%, preferably 100 mol% of the monomers in the second polyolefin A2 are ethylene, propylene and butene,
a softening point of 80 to 120 °C, preferably 98 to 110°C,
a melt viscosity of 1000 to 8000 mPa s, preferably 1,500 to 4,000 mPa s at 190 °C,
thermal stability under load of 80 to 105 °C, preferably 85 to 100 °C,
the gap between softening point and thermal stability under load is less than 30 °C, preferably less than 25 °C.

8. The hot melt adhesive composition according to any of claims 5 to 7, wherein the weight ratio of the first polyolefin A1 to the second polyolefin A2 is 3:1 to 1:3, preferably 2:1 to 1:2.

9. The hot melt adhesive composition according to any of claims 1 to 4, wherein the at least one polyolefin comprises a polyolefin A3 having one or more of the following characters:
at least 80 mol%, preferably 100 mol% of the monomers in the at least one polyolefin are propylene and ethylene,
a softening point of 110 to 140 °C, preferably 115 to 135 °C,
a melt viscosity of 2,000 to 5,000 mPa s, preferably 2,500 to 4,500 mPa s at 190 °C.

10. The hot melt adhesive composition according to any of claims 1 to 9, wherein the wax has a maleric anhydride grafting of 4 to 10 wt%, preferably 5 to 9 wt%.

11. The hot melt adhesive composition according to any of claims 1 to 10, comprising, based on the total weight of the composition:
(A) 20 to 65 wt%, preferably 25 to 60 wt%, more preferably 35 to 55 wt% of the at least one polyolefin;
(B) 12 to 38 wt%, preferably 15 to 35 wt%, more preferably 18 to 30 wt% of the polyolefin-polyamide copolymer;
(C) 15 to 45 wt%, preferably 20 to 40 wt%, more preferably 20 to 30 wt% of the tackifying resin;
(D) 0 to 10 wt%, preferably 2 to 8 wt%, more preferably 3 to 7 wt% of the wax;
(E) 0 to 2 wt%, preferably 0.05 to 1 wt%, more preferably 0.05 to 0.5 wt% of the additives.

12. The hot melt adhesive composition according to any of claims 1 to 10, comprising, based on the total weight of the composition:
(A) 40 to 88 wt%, preferably 45 to 85 wt%, more preferably 60 to 85 wt% of the at least one polyolefin;
(B) 12 to 38 wt%, preferably 15 to 35 wt%, more preferably 15 to 30 wt% of the polyolefin-polyamide copolymer;
(C) 0 to 45 wt%, preferably 0 to 40 wt%, more preferably 0 to 25 wt% of the tackifying resin;
(D) 0 to 10 wt%, preferably 0 to 8 wt%, more preferably 0 to 5 wt% of the wax;
(E) 0 to 2 wt%, preferably 0 to 1 wt%, more preferably 0 to 0.5 wt% of the additives.

13. An article comprising at least one substrate and the hot melt adhesive composition according to any of the claims 1 to 12.

14. Use of the hot melt adhesive composition according to any of claims 1 to 12 for bonding two substrates, wherein at least one of the two substrates is plastic.

15. Use of the polyolefin-polyamide copolymer for reducing stringing of a hot melt adhesive composition,
wherein
the polyolefin-polyamide copolymer has one or more of the following characters:
the polyolefin-polyamide copolymer is a graft copolymer, preferably a polyamide grafted polyolefin;
the melting point of the polyolefin-polyamide copolymer is 110 to 145°C, preferably 120 to 140°C;
the polyolefin in the polyolefin-polyamide copolymer has a melt flow index between 3 and 400 g/10 min, preferably 20 to 200 g/10 min at 190°C;
the polyolefin in the polyolefin-polyamide copolymer is an ethylene/alkyl (meth)acrylate copolymer, preferably a maleic anhydride-containing ethylene/alkyl (meth)acrylate copolymer;
the polyamide in the polyolefin-polyamide copolymer is a copolyamide;
the polyolefin-polyamide copolymer contains 5 to 50 wt%, preferably 15 to 30 wt% of the polyamide;
the polyamide has a number-average molecular weight between 1000 and 5000 g/mol and more preferably between 2000 and 3000 g/mol;
wherein
the stringing length at break of the hot melt adhesive composition is less than 20 mm, preferably less than 5 mm, and
optionally, wherein
the composition has an optical transmission of more than 80%.
